# FASCICULE DE BREVET EUROPEEN

(11) **EP 2 998 207 B1**
(45) Date de publication et mention de la délivrance du brevet: **02.08.2017**
(21) Numéro de dépôt: 15184864.5
(22) Date de dépôt: 11.09.2015
(51) Int. Cl.: B62J 17/06

(54) **TABLIER DE PROTECTION D'UN CONDUCTEUR DE MOTOCYCLE**
SCHUTZSCHÜRZE FÜR MOTORRADFAHRER
PROTECTIVE APRON FOR A MOTORCYCLE RIDER

(30) Priorité: 16.09.2014 FR 1458735
(43) Date de publication de la demande: 23.03.2016
(73) Titulaire: TROPHY, 78420 Carrieres-sur-Seine (FR)
(72) Inventeur: AMIOT, Cyril, 61220 LA COULONCHE (FR); CANTIN, Dominique, 61150 LOUGE SUR MAIRE (FR); PAQUIER, Yannick, 61600 MAGNY-LE-DESERT (FR)
(74) Mandataire: Chevalier, Renaud Philippe

(56) Documents cités:
- FR-A1- 2 834 683
- FR-A3- 2 826 627

## Description

La présente invention se rapporte à un tablier de protection d'un conducteur de motocycle, notamment du type scooter à deux ou trois roues.

Elle se rapporte au domaine technique de la protection des conducteurs de motocycles contre les intempéries, dont le froid et la pluie.

Il est connu, notamment des documents WO 2012/045954 et EP 2 559 612, d'employer des tabliers mono-pièces qui présentent les éléments requis pour protéger ces conducteurs, à savoir une couche en matériau imperméable contre la pluie et une doublure isolante constituée d'un matériau isolant contre le froid.

Cependant, ce type de tablier présente l'inconvénient d'être encombrant, de sorte que son usage est généralement limité aux périodes froides en pluvieuses, soit classiquement en hiver et éventuellement entre mi-automne et mi-printemps.

Or, une fois le tablier complètement retiré, le conducteur trouve fastidieux de replacer ce dernier sur son motocycle si ponctuellement se présentent des intempéries (froid, pluie). En effet, le tablier est fixé sur la carrosserie du motocycle au moyens d'organes d'ancrage (crochets, vis, etc.) et les opérations d'ancrage et de retrait du tablier s'avèrent longues et complexes.

Il est également connu du document FR 2 826 627 d'employer un tablier de protection comportant une nappe souple pourvue d'organes d'ancrage sur le motocycle, et une jupe souple propre à recouvrir au moins en partie les jambes du conducteur, cette jupe étant rattachée à ladite nappe par au moins un système de fixation amovible et réversible afin de permettre le détachement complet de la jupe vis-à-vis de la nappe.

Cependant, ce tablier n'offre que deux utilisations, à savoir une utilisation de non protection avec la jupe souple détachée, et une utilisation de protection avec la jupe souple attachée.

La présente invention a pour but de résoudre ces problèmes, en proposant selon les termes de la revendication 1 un tablier qui peut servir toute l'année, sans nécessité de manipuler les organes d'ancrage du tablier sur le motocycle, et qui ne présente pas de gêne ou d'encombrement pendant les périodes sans intempérie.

A cet effet, elle propose un tablier de protection d'un conducteur de motocycle, notamment du type scooter à deux ou trois roues, ce tablier comportant :
- une nappe souple pourvue d'organes d'ancrage sur le motocycle, ladite nappe souple présentant une face interne sur laquelle est fixée solidairement une couverture souple déplaçable entre une position escamotée par enroulement ou pliage, et une position déployée propre à recouvrir au moins en partie les jambes du conducteur, ladite nappe souple supportant des organes de maintien de la couverture dans la position escamotée ; et
- une jupe souple qui présente une isolation thermique supérieure à celle de la couverture et qui est propre à recouvrir au moins en partie les jambes du conducteur, ladite jupe étant rattachée à ladite nappe par au moins un système de fixation amovible et réversible afin de permettre le détachement complet de la jupe vis-à-vis de la nappe, ce système de fixation comprenant des dispositifs de fixation complémentaires prévus respectivement sur la jupe et sur la nappe pour coopérer ensemble.

Le tablier conforme à l'invention offre donc trois configurations :
- une configuration dite hivernale avec la jupe attachée à la nappe ;
- une configuration dite estivale avec la jupe détachée de la nappe et avec la couverture en position escamotée ;
- une configuration dite de mi-saison avec la jupe détachée de la nappe et avec la couverture en position déployée.

Grâce à l'invention, la jupe, qui constitue la partie la plus encombrante et lourde du tablier, peut donc être retirée facilement grâce au système de fixation amovible et réversible, lorsque le conducteur le juge nécessaire, sans pour autant désancrer complètement le tablier car la nappe reste elle en place.

Ainsi, pendant toute l'année, la nappe reste ancrée sur le motocycle au moyen des organes d'ancrage, et trois usages sont ensuite prévus :
- pendant les jours d'intempérie et surtout de froid, la jupe reste attachée à la nappe et offre les mêmes avantages qu'un tablier mono-pièce classique en offrant par exemple les éléments requis pour protéger le conducteurs, à savoir une couche en matériau imperméable contre la pluie et une doublure isolante constituée d'un matériau isolant contre le froid ;
- pendant les jours sans intempérie ou de mi-saison, la jupe est détachée de la nappe et entreposée dans un local, et la nappe reste par contre en place sur le motocycle, de sorte que le tablier se réduit à la nappe qui n'est pas encombrante et en l'absence d'intempérie la couverture reste en position escamotée, ou bien si le conducteur a besoin uniquement d'une légère protection (par exemple contre un léger froid), il suffit de dérouler ou déplier la couverture (plus légère que la jupe) afin de couvrir au moins en partie les jambes.

Selon une caractéristique, la nappe souple présente un bord avant supportant les organes d'ancrage sur le motocycle, et un bord arrière opposé sur lequel est prévu un premier dispositif de fixation complémentaire du au moins un système de fixation de la jupe sur la nappe, la jupe présentant un bord avant sur lequel est prévu un second dispositif de fixation complémentaire du au moins un système de fixation de la jupe sur la nappe, les premier et second dispositifs de fixation complémentaires étant propres à coopérer ensemble.

Selon une autre caractéristique, la couverture est fixée sur la face interne de la nappe le long de son bord arrière.

Dans une réalisation particulière, le système de fixation est du type fermeture à glissière et comprend comme dispositifs de fixation complémentaires des bandes d'accouplement complémentaires fixées respectivement sur la jupe et sur la nappe, l'une ce ces bandes d'accouplement étant pourvue d'un curseur propre à mettre en prise et hors prise ces bandes d'accouplement.

En variante, le système de fixation peut être du type bande auto-agrippante, bouton-pression, bouton passant, système d'encliquetage, crochet, ou une combinaison de tout ou partie des systèmes de fixation décrits ci-dessus.

Dans un mode de réalisation particulier, les organes d'ancrage de la nappe sur le motocycle comprennent des liens, notamment du type sangle réglable en longueur et/ou élastique, supportant des crochets ou vis.

Avantageusement, la nappe et la jupe supportent chacune un anneau fermé, notamment du type oeillet, et le tablier comprend en outre un organe de verrouillage antivol de la jupe sur la nappe propre à coopérer avec les anneaux de la jupe et de la nappe.

Ainsi, comme la jupe peut être détachée de la nappe, un tel organe de verrouillage permet de se prémunir d'un vol de la jupe ; cet organe de verrouillage pouvant par exemple être du type cadenas à clé ou à code.

Selon l'invention, la jupe présente une isolation thermique supérieure à celle de la couverture.

Ainsi, la jupe est plus adaptée pour les périodes froides et donc plus lourde, tandis que la couverture est plus adaptée pour les périodes moins froides voire chaudes et est donc plus légère.

De manière avantageuse, la nappe et la jupe supportent chacune des dispositifs rétro-réfléchissants, tandis que la couverture ne supporte pas de dispositif rétro-réfléchissant.

Conformément à une autre caractéristique avantageuse de l'invention, la jupe comporte une doublure isolante constituée d'un matériau isolant contre le froid, tandis que la couverture ne comporte pas de doublure isolante.

La présente invention concerne également la caractéristique selon laquelle la nappe et la jupe comportent chacune une couche en matériau imperméable, tandis que la couverture ne comporte pas de couche en matériau imperméable.

Ainsi, la jupe est plus adaptée pour les périodes pluvieuses et est donc plus lourde, tandis que la couverture est plus adaptée pour les périodes non pluvieuses et est donc plus légère.

En variante, la nappe, la jupe et la couverture comportent chacune une couche en matériau imperméable.

Ainsi, tout en étant plus légère parce que moins chaude, la couverture peut tout de même servir en cas de pluie.

D'autres caractéristiques et avantages de la présente invention apparaîtront à la lecture de la description détaillée ci-après, d'un exemple de mise en oeuvre non limitatif, faite en référence aux figures annexées dans lesquelles :

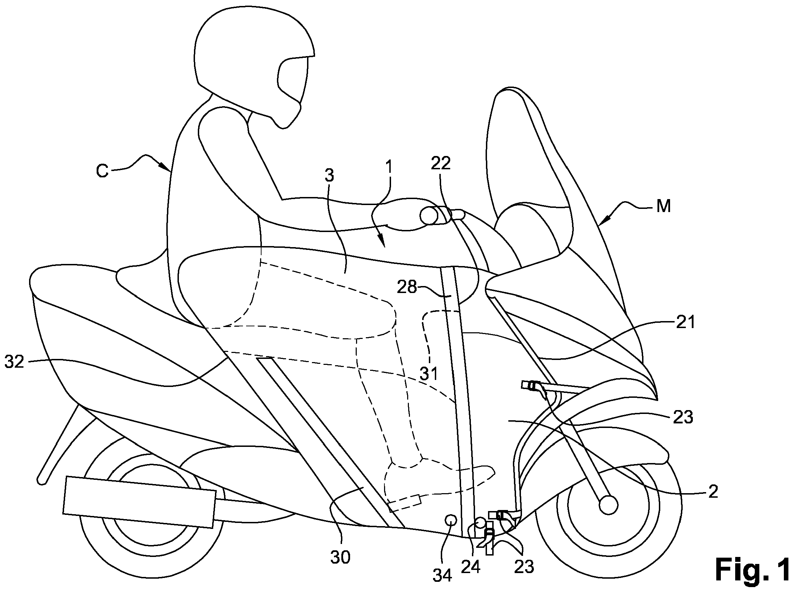

- la figure 1 est une vue schématique de côté d'un motocycle sur lequel est monté un tablier conforme à l'invention, dans sa configuration hivernale ;
- la figure 2 est une vue schématique de côté de l'ensemble motocycle / tablier de la figure 1, où le tablier est dans sa configuration estivale ;
- la figure 3 est une vue schématique de côté de l'ensemble motocycle / tablier de la figure 1, où le tablier est dans sa configuration de mi-saison.

En référence aux figures, le tablier 1 conforme à l'invention comporte principalement trois parties souples, à savoir une nappe 2, une jupe 3 et une couverture 4.

La nappe 2 souple présente un bord avant 21 sur lequel sont prévus des organes d'ancrage 23 de la nappe 2 sur la carrosserie du motocycle M, et en particulier sur le tablier T du motocycle. Ces organes d'ancrage 23 peuvent être du type comprenant un lien, comme par exemple un une sangle réglable en longueur et/ou élastique, supportant un crochet propre à s'engager dans une fente existante de la carrosserie du motocycle M, ou une vis propre à se visser sur un point d'ancrage existant de la carrosserie du motocycle M.

La nappe 2 est réalisée dans un matériau souple, et notamment dans un assemblage de plusieurs couches de matériau souple, textile et/ou polymérique. A titre d'exemple, la nappe 2 est composée d'un assemblage d'une couche externe en matériau imperméable, notamment en polyester, d'une couche en nylon, et d'une couche interne de garniture, notamment en matériau textile.

La nappe 2 peut également présenter sur son bord avant 21 des joints d'étanchéité propres à être montés sur le motocycle pour assurer l'étanchéité de la nappe 2 le long, à minima, de son bord avant 21.

La nappe 2 peut également intégrer des éléments semi-rigides ou rigides pour que la nappe 2 suive au mieux le profil du motocycle, et également pour que le battement de la nappe 2 sous l'effet du vent soit réduit.

La nappe 2 peut également supporter extérieurement des bandes rétro-réfléchissantes (non illustrées).

La nappe 2 présente également un bord arrière 22, opposé au bord avant 21, qui présente une forme générale de « U » inversé une fois la nappe 2 en place sur le motocycle M. Ce bord arrière 22 est équipé, sur tout ou partie de sa longueur, d'une bande d'accouplement (non visible) de fermeture à glissière. Un rabat 28 peut éventuellement être prévu sur ce bord arrière 22 pour venir en recouvrement de cette bande d'accouplement et donc de la fermeture à glissière.

Un anneau 24, qui se présente sous la forme d'un oeillet renforcé traversant la nappe 2, peut également être prévu sur la nappe 2 à proximité de son bord arrière 22. Cet anneau peut également se présenter sous la forme d'un anneau saillant extérieurement de la nappe 2 sans la traverser.

La jupe 3 est attachée de manière amovible et réversible sur le bord arrière 22 de la nappe 2, au moyen d'une fermeture à glissière (non visible). A cet effet, la jupe 3 présente un bord avant 31, qui présente une forme générale de « U » inversé une fois la jupe 3 en place sur la nappe 2 de mêmes dimensions que le bord arrière 22 de la nappe 2. Ce bord avant 31 est équipé, sur tout ou partie de sa longueur, d'une bande d'accouplement (non visible) de fermeture à glissière, complémentaire de la bande d'accouplement prévue sur le bord arrière 22 de la nappe 2.

L'une de ces deux bandes d'accouplement est pourvue d'un curseur propre à mettre en prise les bandes d'accouplement (et ainsi assurer la solidarisation ente la jupe 3 et la nappe 2) et hors prise les bandes d'accouplement (et ainsi assurer la désolidarisation ente la jupe 3 et la nappe 2).

La jupe 3 est propre à recouvrir au moins en partie les jambes du conducteur C et est réalisée dans un matériau souple, et notamment dans un assemblage de plusieurs couches de matériau souple, textile et/ou polymérique. A titre d'exemple, la jupe 3 est composée d'un assemblage d'une couche externe en matériau imperméable, notamment en polyester, d'une couche en nylon, d'une couche en toile, d'une doublure isolante constituée d'un matériau isolant contre le froid, notamment en laine polaire, et d'une couche interne de garniture, notamment en matériau textile.

La jupe 3 peut également intégrer des éléments semi-rigides ou rigides pour que la nappe 2 suive au mieux le profil du motocycle, et également pour que le battement de la nappe 2 sous l'effet du vent soit réduit.

La jupe 3 peut également supporter extérieurement des bandes rétro-réfléchissantes 30.

La jupe 3 présente également un bord arrière 32, opposé au bord avant 21, qui présente un système de serrage autour de la taille du conducteur C, et cette jupe 3 est propre à englober le conducteur C sur les hanches et fessier afin de protéger le conducteur C sous sa taille. Un tel serrage donne de la rigidité latérale à la jupe 3 pour ne pas battre au vent à haute vitesse. Ce système de serrage (non illustré) peut par exemple être réalisé sous la forme d'une bande auto-agrippante, d'un cordon de serrage ou d'une ceinture.

Un anneau 34, qui se présente sous la forme d'un oeillet renforcé traversant la jupe 3, peut également être prévu sur la jupe 3 à proximité de son bord avant 31. Cet anneau peut également se présenter sous la forme d'un anneau saillant extérieurement de la jupe 3 sans la traverser.

Ainsi, le tablier 1 peut également comprendre un organe de verrouillage antivol (non illustré) de la jupe 3 sur la nappe 2 propre à coopérer avec les anneaux 24, 34 respectifs de la nappe 2 et de la jupe 3, en s'engageant à travers ces anneaux 24, 34. Cet organe de verrouillage antivol peut se présenter sous la forme d'un cadenas à clé ou à code.

La couverture 4 est fixée solidairement, notamment par couture ou soudure, sur une face interne de la nappe 2 (cette face interne étant opposée à la face externe exposée aux intempéries), le long du bord arrière 22 de la nappe 2.

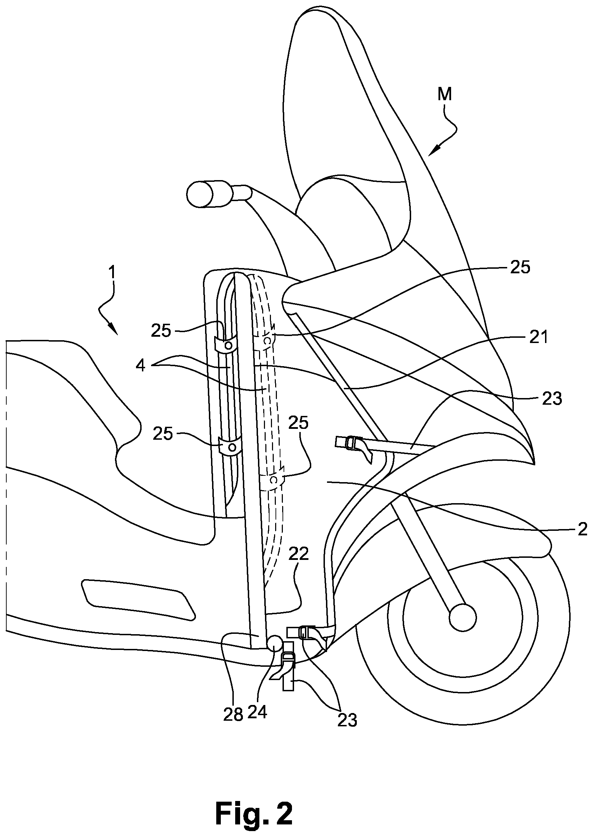

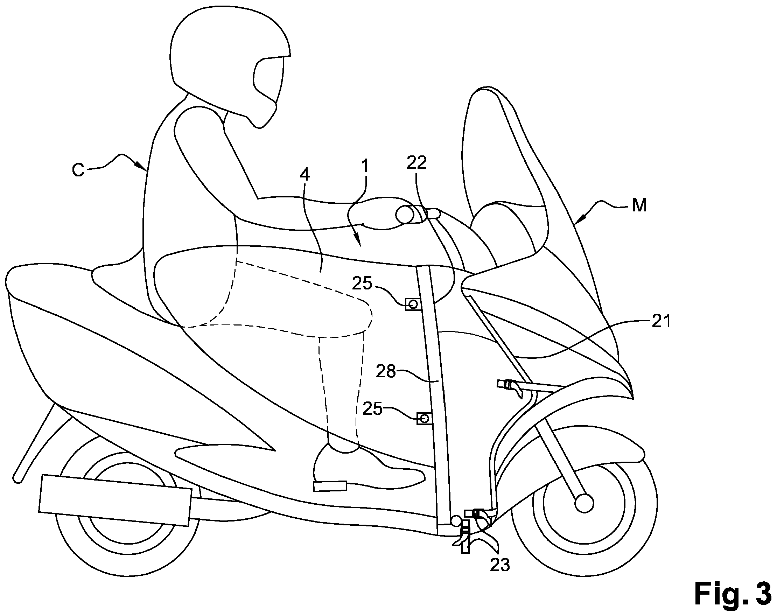

La couverture 4 souple est déplaçable entre une position escamotée (illustrée sur la figure 2) par enroulement ou pliage, et une position déployée (illustrée sur la figure 3) propre à recouvrir au moins en partie les jambes du conducteur C.

Pour maintenir la couverture 4 enroulée ou pliée, la nappe 2 supporte des organes de maintien 25 de la couverture 4 dans sa position escamotée. Ces organes de maintien 25 peuvent se présenter sous la forme de bandes ou sangles, réparties à intervalles plus ou mois réguliers le long du bord arrière 22 de la nappe 2, pourvues à leurs extrémités d'organes de fixation, notamment du type bande auto-agrippante, bouton pression, crochet, organe d'encliquetage.

La couverture 4 présente une isolation thermique inférieure à celle de la jupe 3, et peut être réalisée sous la forme d'une couverture en matériau textile ou polymérique, comme par exemple une couverture en nylon, sans doublure isolante et éventuellement sans couche en matériau imperméable. La couverture 4 est plus légère que la jupe 3, à des fins d'utilisation dans des conditions de température supérieures à celles requises pour l'utilisation de la jupe 3.

La couverture 4 peut également présenter un système de serrage autour de la taille du conducteur C, et cette couverture 4 est propre à englober le conducteur C sur les hanches et fessier afin de protéger le conducteur C sous sa taille. Un tel serrage donne de la rigidité latérale à la couverture 4 pour ne pas battre au vent à haute vitesse. Ce système de serrage (non illustré) peut par exemple être réalisé sous la forme d'une bande auto-agrippante, d'un cordon de serrage ou d'une ceinture.

Bien entendu l'exemple de mise en oeuvre évoqué ci-dessus ne présente aucun caractère limitatif et d'autres améliorations et détails peuvent être apportés au tablier selon l'invention, sans pour autant sortir du cadre de l'invention où d'autres modes de réalisation du système de fixation amovible et réversible de la jupe 3 sur la nappe 2 peuvent par exemple être réalisées, à la place de la fermeture à glissière. Il est notamment envisageable de prévoir une fixation amovible de la jupe 3 sur la nappe 2 par bande auto-agrippante, bouton-pression, bouton passant, système d'encliquetage, crochet, ou une combinaison de ces dispositifs.

## Revendications

1. Tablier (1) de protection d'un conducteur (C) de motocycle (M), notamment du type scooter à deux ou trois roues, ledit tablier (1) comportant :
- une nappe (2) souple pourvue d'organes d'ancrage (23) sur le motocycle (M) ; et
- une jupe (3) souple propre à recouvrir au moins en partie les jambes du conducteur (C), ladite jupe (3) étant rattachée à ladite nappe (2) par au moins un système de fixation amovible et réversible afin de permettre le détachement complet de la jupe (3) vis-à-vis de la nappe (2), ce système de fixation comprenant des dispositifs de fixation complémentaires prévus respectivement sur la jupe (3) et sur la nappe (2) pour coopérer ensemble ;
ledit tablier (1) étant **caractérisé en ce que** ladite nappe (2) souple présente une face interne sur laquelle est fixée solidairement une couverture (4) souple déplaçable entre une position escamotée par enroulement ou pliage, et une position déployée propre à recouvrir au moins en partie les jambes du conducteur (C), ladite nappe (2) souple supportant des organes de maintien (25) de la couverture (4) dans la position escamotée, où la jupe (3) présente une isolation thermique supérieure à celle de la couverture (4).

2. Tablier (1) selon la revendication 1, dans lequel la nappe (2) souple présente un bord avant (21) supportant les organes d'ancrage (23) sur le motocycle (M), et un bord arrière (22) opposé sur lequel est prévu un premier dispositif de fixation complémentaire du au moins un système de fixation de la jupe (3) sur la nappe (2), la jupe (3) présentant un bord avant (31) sur lequel est prévu un second dispositif de fixation complémentaire du au moins un système de fixation de la jupe (3) sur la nappe (2).

3. Tablier (1) selon la revendication 2, dans lequel la couverture (4) est fixée sur la face interne de la nappe (2) le long de son bord arrière (22).

4. Tablier (1) selon l'une quelconque des revendications précédentes, dans lequel le système de fixation est du type fermeture à glissière et comprend comme dispositifs de fixation complémentaires des bandes d'accouplement complémentaires fixées respectivement sur la jupe (3) et sur la nappe (2), l'une desdites bandes d'accouplement étant pourvue d'un curseur propre à mettre en prise et hors prise lesdites bandes d'accouplement.

5. Tablier (1) selon l'une quelconque des revendications précédentes, dans lequel les organes d'ancrage (23) de la nappe (2) sur le motocycle (M) comprennent des liens, notamment du type sangle réglable en longueur et/ou élastique, supportant des crochets ou vis.

6. Tablier (1) selon l'une quelconque des revendications précédentes, dans lequel la nappe (2) et la jupe (3) supportent chacune un anneau (24, 34) fermé, notamment du type oeillet, et le tablier (1) comprend en outre un organe de verrouillage antivol de la jupe (3) sur la nappe (2) propre à coopérer avec les anneaux (24, 34) de la nappe (2) et de la jupe (3).

7. Tablier (1) selon l'une quelconque des revendications précédentes, dans lequel la jupe (3) comporte une doublure isolante constituée d'un matériau isolant contre le froid, tandis que la couverture (4) ne comporte pas de doublure isolante.

8. Tablier (1) selon l'une quelconque des revendications précédentes, dans lequel la nappe (2) et la jupe (3) supportent chacune des dispositifs rétro-réfléchissants (30), tandis que la couverture (4) ne supporte pas de dispositif rétro-réfléchissant.

9. Tablier (1) selon l'une quelconque des revendications 1 à 8, dans lequel la nappe (2) et la jupe (3) comportent chacune une couche en matériau imperméable, tandis que la couverture (4) ne comporte pas de couche en matériau imperméable.

10. Tablier (1) selon l'une quelconque des revendications 1 à 8, dans lequel la nappe (2), la jupe (3) et la couverture (4) comportent chacune une couche en matériau imperméable.

## Patentansprüche

1. Schürze (1) zum Schutz des Fahrers (C) eines Motorrads (M), insbesondere vom Typ Scooter mit zwei oder drei Rädern, wobei die Schürze (1) Folgendes umfasst:
- ein flexibles Tuch (2), ausgestattet mit Organen zur Verankerung (23) auf dem Motorrad (M); und
- einen flexiblen Mantel (3), der geeignet ist, mindestens teilweise die Beine des Fahrers (C) abzudecken, wobei der Mantel (3) durch mindestens ein System zur abnehmbaren und reversiblen Fixierung an das Tuch (2) befestigt ist, um die vollständige Lösung des Mantels (3) gegenüber dem Tuch (2) zu ermöglichen, wobei dieses Fixierungssystem komplementäre Fixierungsvorrichtungen umfasst, die jeweils auf dem Mantel (3) und auf dem Tuch (2) vorgesehen sind, um zusammenzuarbeiten; wobei die Schürze (1) **dadurch gekennzeichnet ist, dass** das flexible Tuch (2) eine Innenseite aufweist, auf der fest verbunden eine flexible Abdeckung (4) fixiert ist, die zwischen einer durch Rollen oder Falten zurückgezogene Position und einer ausgezogenen Position verschoben werden kann, die geeignet ist, um mindestens teilweise die Beine des Fahrers (C) abzudecken, wobei das flexible Tuch (2) Mittel zum Halten (25) der Abdeckung (4) in der zurückgezogenen Position trägt, wobei der Mantel (3) eine thermische Isolierung aufweist, die höher als diejenige der Abdeckung (4) ist.

2. Schürze (1) nach Anspruch 1, wobei das Tuch (2) einen vorderen Rand (21) aufweist, der die Organe zur Verankerung (23) auf dem Motorrad (M) trägt, und einen gegenüber liegenden hinteren Rand (22), auf dem eine komplementäre erste Vorrichtung zur Fixierung des mindestens einen Systems zur Fixierung des Mantels (3) auf dem Tuch (2) vorgesehen ist, wobei der Mantel (3) einen vorderen Rand (31) aufweist, auf dem eine komplementäre zweite Vorrichtung zur Fixierung des mindestens einen Systems zur Fixierung des Mantels (3) auf dem Tuch (2) vorgesehen ist.

3. Schürze (1) nach Anspruch 2, wobei die Abdeckung (4) auf der Innenseite des Tuchs (2) entlang ihrem hinteren Rand (22) fixiert ist.

4. Schürze (1) nach einem der vorhergehenden Ansprüche, wobei das System zur Fixierung vom Typ Verschluss mit Gleitschiene ist und als komplementäre Vorrichtungen zur Fixierung komplementäre Kopplungsbänder umfasst, die jeweils auf dem Mantel (3) und auf dem Tuch (2) fixiert sind, wobei eines der Kopplungsbänder mit einem Schieber ausgestattet ist, der geeignet ist, die Kopplungsbänder in Eingriff zu bringen und zu lösen.

5. Schürze (1) nach einem der vorhergehenden Ansprüche, wobei die Organe zur Verankerung (23) des Tuchs (2) auf dem Motorrad (M) Verbindungen umfassen, insbesondere vom Typ in der Länge regulierbarer und/oder elastischer Gurt, der Haken oder Schrauben trägt.

6. Schürze (1) nach einem der vorhergehenden Ansprüche, wobei das Tuch (2) und der Mantel (3) jeweils einen geschlossenen Ring (24, 34) umfassen, insbesondere vom Typ Öse, und die Schürze (1) außerdem ein Organ zur Diebstahlschutz-Verriegelung des Mantels (3) auf dem Tuch (2) umfasst, das geeignet ist, mit den Ringen (24, 34) der Schürze (2) und des Mantels (3) zusammenzuarbeiten.

7. Schürze (1) nach einem der vorhergehenden Ansprüche, wobei der Mantel (3) ein isolierendes Futter umfasst, das aus einem gegen Kälte isolierenden Material besteht, während die Abdeckung (4) kein isolierendes Futter umfasst.

8. Schürze (1) nach einem der vorhergehenden Ansprüche, wobei das Tuch (2) und der Mantel (3) jeweils retroreflektierende Vorrichtungen (30) tragen, während die Abdeckung (4) keine retroreflektierende Vorrichtung trägt.

9. Schürze (1) nach einem der Ansprüche, 1 bis 8, wobei das Tuch (2) und der Mantel (3) jeweils eine Schicht aus undurchlässigem Material umfassen, während die Abdeckung (4) keine Schicht aus undurchlässigem Material umfasst.

10. Schürze (1) nach einem der Ansprüche, 1 bis 8, wobei das Tuch (2), der Mantel (3) und die Abdeckung (4) jeweils eine Schicht aus undurchlässigem Material umfassen.

## Claims

1. An apron (1) for protecting a motorcycle (M) driver (C), in particular of the type scooter with two or three wheels, said apron (1) including:
- a flexible sheet (2) provided with anchor members (23) on the motorcycle (M); and
- a flexible skirt (3) suitable for covering at least partially the legs of the driver (C), said skirt (3) being attached to said sheet (2) by at least one removable and reversible fastening system in order to allow the complete detachment of the skirt (3) from the sheet (2), this fastening system comprising complementary fastening devices provided respectively on the skirt (3) and on the sheet (2) to cooperate together;
said apron (1) being **characterized in that** said flexible sheet (2) has an inner face on which is fastened in a secured manner a flexible cover (4) displaceable between a retracted position by winding or folding, and a deployed position suitable for covering at least partially the legs of the driver (C), said flexible sheet (2) supporting holding members (25) for holding the cover (4) in the retracted position, wherein the skirt (3) has a thermal insulation greater than that of the cover (4).

2. The apron (1) according to claim 1, wherein the flexible sheet (2) has a front edge (21) supporting the anchor members (23) on the motorcycle (M), and an opposite rear edge (22) on which is provided a first fastening device complementary to the at least one fastening system for fastening the skirt (3) on the sheet (2), the skirt (3) having a front edge (31) on which is provided a second fastening device complementary to the at least one fastening system for fastening the skirt (3) on the sheet (2).

3. The apron (1) according to claim 2, wherein the cover (4) is fastened on the inner face of the sheet (2) along its rear edge (22).

4. The apron (1) according to any one of the preceding claims, wherein the fastening system is of the slide fastener type and comprises as complementary fastening devices some complementary coupling strips fastened respectively on the skirt (3) and on the sheet (2), one of said coupling strips being provided with a slider suitable for engaging and disengaging said coupling strips.

5. The apron (1) according to any one of the preceding claims, wherein the anchor members (23) of the sheet (2) on the motorcycle (M) comprise links, in particular of the strap type which is adjustable in length and/or elastic, supporting hooks or screws.

6. The apron (1) according to any one of the preceding claims, wherein the sheet (2) and the skirt (3) each support a closed ring (24, 34), in particular of the eyelet type, and the apron (1) further comprises an anti-theft locking member of the skirt (3) on the sheet (2) suitable for cooperating with the rings (24, 34) of the sheet (2) and of the skirt (3).

7. The apron (1) according to any one of the preceding claims, wherein the skirt (3) includes an insulating lining consisting of an insulating material against cold, while the cover (4) does not include an insulating lining.

8. The apron (1) according to any one of the preceding claims, wherein the sheet (2) and the skirt (3) each support some retro-reflective devices (30), while the cover (4) does not support a retro-reflective device.

9. The apron (1) according to any one of claims 1 to 8, wherein the sheet (2) and the skirt (3) each include a layer made of impermeable material, while the cover (4) does not include a layer made of impermeable material.

10. The apron (1) according to any one of claims 1 to 8, wherein the sheet (2), the skirt (3) and the cover (4) each include a layer made of impermeable material.
